# EUROPEAN PATENT SPECIFICATION

(11) **EP 1 035 346 B1**
(45) Date of publication and mention of the grant of the patent: **24.03.2004**
(21) Application number: 99944852.5
(22) Date of filing: 28.09.1999
(51) Int. Cl.: F16D 65/20, F16D 65/21

(54) **DISC BRAKE**
SCHEIBENBREMSE
FREIN A DISQUE

(30) Priority: 28.09.1998 JP 27326998
(43) Date of publication of application: 13.09.2000
(73) Proprietor: Akebono Brake Industry Co., Ltd., Tokyo 103-0016 (JP); Akebono Research and Development Centre Ltd., Hanyu-shi, Saitama-ken 348-0052 (JP)
(72) Inventor: OGAWA, Yutaka, Akebono Res. and Dev. Centre, Ltd., Hanyu-shi, Saitama 348-0052 (JP)
(74) Representative: Grünecker, Kinkeldey, Stockmair & Schwanhäusser Anwaltssozietät
(86) International application number: PCT/JP1999/005270
(87) International publication number: WO 2000/019121

(56) References cited:
- JP-A- 9 203 426
- JP-A- 10 016 760
- JP-A- 54 074 970
- US-A- 3 901 358
- US-A- 4 705 323
- US-A- 5 645 143
- PATENT ABSTRACTS OF JAPAN vol. 1998, no. 12, 31 October 1998 (1998-10-31) -& JP 10 196519 A (AKEBONO BRAKE IND CO LTD), 31 July 1998 (1998-07-31)

## Description

### TECHNICAL FIELD

The present invention relates to a disc brake comprising a piston slideably disposed in a cylinder of a caliper body so that hydraulic pressure supplied into the cylinder makes the piston press a friction pad against a rotor, wherein the disc brake further comprises an electrically operated hydraulic pressure generator for supplying hydraulic pressure into the cylinder, wherein the electrically operated hydraulic pressure generator is configured to generate hydraulic pressure in accordance with a braking operation by use of a solid-state component having an electrically controllable expanding/contracting operation as a drive source, and the electrically operated hydraulic pressure generator is accommodated in the caliper body, and wherein said caliper body further includes a bridge portion which strides across an outer circumference of said rotor.

### BACKGROUND ART

In a recent vehicle braking device, intelligent automation of a braking function, for example, equipment of an anti-lock braking system or equipment of a traction control system, has been actively developed. Both electrical driving and reduction in size of an hydraulic pressure generator (pump) incorporated as a hydraulic source in a braking device have become more indispensable with the advance of such intelligent automation.

From the aforementioned background, there has been proposed an electrically operated hydraulic pressure generator having a pump portion for pumping fluid out by reciprocating a piston disposed in a housing, and a piston driving portion using a solid-state component having an electrically controllable expanding/contracting operation as a drive source for reciprocating the piston.

In this case, piezoelectric ceramics and super-megnetostrictors have been proposed as solid-state components having an electrically controllable expanding/contracting operation (see JP-A-7-167327, JP-A-8-334082).

As hydraulic disc brakes of the type electrically driven by use of such an electrically operated hydraulic pressure generator , there have been heretofore proposed various disc brakes in a structure in which an electrically operated hydraulic pressure generator is disposed near to a brake operating portion and connected, through hydraulic piping, to a cylinder in a braking unit disposed near to a wheel.

In the aforementioned configuration, however, the hydraulic piping between the cylinder and the electrically operated hydraulic pressure generator became so long that transmission of hydraulic pressure from the electrically operated hydraulic pressure generator to the cylinder was delayed. There was therefore a problem that it was difficult to improve operating accuracy in terms of response.

Moreover, seeking a good laying route for hydraulic piping, setting a protective cover, or the like, was required in order to prevent the hydraulic piping from being damaged by a flying stone, or the like. Therefore, there was also a problem that this caused both reduction in the degree of freedom of parts layout and increase in production cost.

In addition, inspection of long hydraulic piping was indispensable to insurance of safety of braking. There was therefore pointed out a problem that the inspection had to cover a wide range to cause lowering of maintenance property.

US 4,705,323 discloses a disc brake of the above-mentioned type in which a piezo piston mechanism is formed coaxially with a wheel cylinder. A piston member of the piezo piston mechanism is moveably provided in a bore formed in a wall between an oil chamber of the wheel cylinder and the piston member, so that the oil pressure in the oil chamber is variably controlled by the movement of the piston member.

The present invention has been achieved upon such circumstances and it is an object thereof to provide a disc brake in which transmission of hydraulic pressure from the electrically operated hydraulic pressure generator to the cylinder in a braking unit is made efficiently in which a countermeasure for protection of the hydraulic piping can be omitted, and in which an improvement of maintenance property is achieved.

### DISCLOSURE OF THE INVENTION

In order to attain the foregoing object, according to the present invention, there is provided a disc brake comprising a piston slidably disposed in a cylinder of a caliper body so that hydraulic pressure supplied into the cylinder makes the piston press friction pads against a rotor, wherein the disc brake further comprises an electrically operated hydraulic pressure generator for supplying hydraulic pressure into the cylinder, the electrically operated hydraulic pressure generator being configured to generate hydraulic pressure in accordance with a braking operation by use of a solid-state component having an electrically controllable expanding/contracting operation as a drive source, and the electrically operated hydraulic pressure generator being accommodated in the caliper body, and wherein the caliper body further includes a bridge portion, which strides across an outer circumference of said rotor, characterised in that the electrically operated hydraulic pressure generator is accommodated in said bridge portion.

According to the aforementioned configuration, the electrically operated hydraulic pressure generator is incorporated in the caliper body itself in the braking unit. Hence, hydraulic piping provided in the background-art structure for connecting the cylinder and the electrically operated hydraulic pressure generator to each other can be omitted if a hydraulic passage for leading hydraulic pressure to the cylinder is formed in the caliper body itself. Moreover, the transmission time of hydraulic pressure can be shortened because the distance between the cylinder and the electrically operated hydraulic pressure generator is reduced extremely. Moreover, because a controller for actuating the electrically operated hydraulic pressure generator in accordance with a braking operation and the electrically operated hydraulic pressure generator are merely connected to each other by an electric wiring line, a fault in the electric wiring line can be detected easily by a continuity check test, or the like, compared with hydraulic piping in the background-art structure.

Moreover, because the inspection of the electrically operated hydraulic pressure generator can be made simultaneously with the inspection of the cylinder of the caliper body, the number of points to be inspected for insurance of safety of the brake can be reduced.

The disc brake is configured so that the caliper body further includes a bridge portion which straddles across an outer circumference of the rotor, and that the electrically operated hydraulic pressure generator is accommodated in the bridge portion.

According to this configuration, the bridge portion forms a pipe structure because of its provision of a hollow portion for accommodating the electrically operated hydraulic pressure generator . Hence, enhancement in stiffness of the bridge portion and the caliper body as a whole can be achieved while increase in weight thereof is suppressed compared with the case of a solid structure.

### BRIEF DESCRIPTION OF THE DRAWINGS

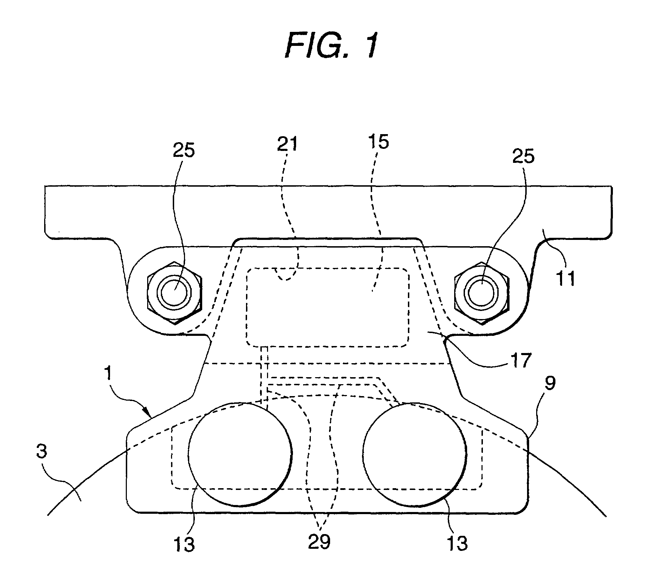

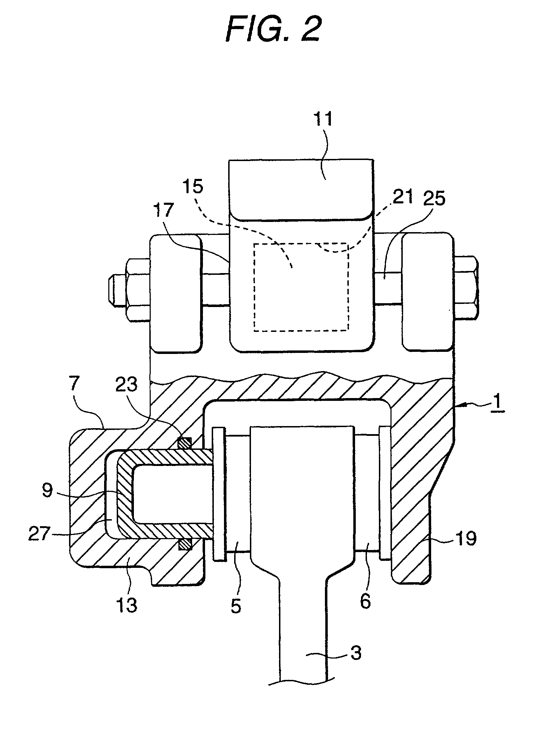

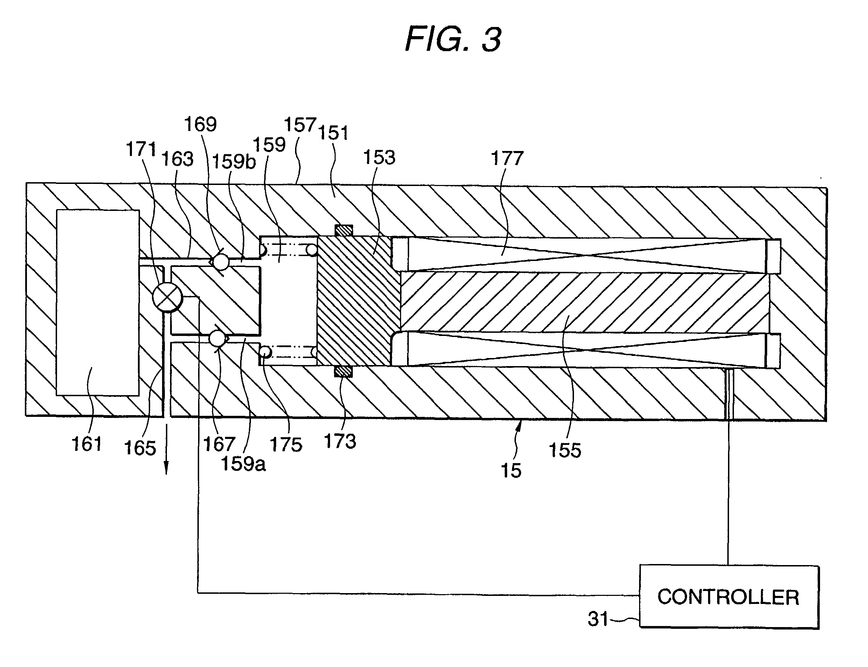

Fig. 1 is a front view of important part of a disc brake according to the present invention; Fig. 2 is a partial cutaway side view of the disc brake according to the present invention; and Fig. 3 is a vertical sectional view showing the configuration of an electrically operated hydraulic pressure generator .

In the drawings, the reference numeral 1 designates a disc brake; 3, a rotor; 7, a caliper body; 9, a piston; 11, a support member; 13, a cylinder; 15, an electrically operated hydraulic pressure generator ; 17, a bridge portion; 21, a hydraulic source storage portion; and 29, a fluid passage.

### BEST MODE FOR CARRYING OUT THE INVENTION

A preferred embodiment of a disc brake according to the present invention will be described below in detail with reference to the drawings.

Figs. 1 to 3 show an embodiment of a disc brake according to the present invention. Fig. 1 is a front view of important part of a disc brake according to the present invention; Fig. 2 is a partial cutaway side view of Fig. 1; and Fig. 3 is a vertical sectional view of an electrically operated hydraulic pressure generator incorporated in the caliper body of Fig. 1.

A disc brake 1 is a floating caliper type disc brake which is called a pin slide type. The disc brake 1 includes a disc rotor 3 integrally rotating with a wheel, a pair of friction pads 5 and 6 disposed so as to be opposite to each other on the opposite sides of the rotor 3, a caliper body 7 provided with a piston 9 for pressing the pair of friction pads 5 and 6 against the rotor 3, a support member 11 fixed on the vehicle body for supporting the caliper body 7, and an electrically operated hydraulic pressure generator 15 for supplying hydraulic pressure, in accordance with the braking operation, into a cylinder 13 formed on the caliper body 7 which accommodates the piston 9 slidably.

The caliper body 7 is provided with the cylinder 13 and a reaction portion 19 at one and the other end, respectively, of a bridge portion 17 which strides across an outer circumference of the rotor 3. The cylinder 13 accommodates the piston 9 slidable in the axial direction of the rotor 3 so that the piston 9 presses the one friction pad 5 against the rotor 3. The reaction portion 19 presses the other friction pad 6 against the rotor 3.

In addition, a hydraulic source storage portion 21 for storing the electrically operated hydraulic pressure generator 15 is formed in the bridge portion 17.

A sealing member 23 is provided on an inner circumference of the cylinder 13 so that the piston 9 in a sliding state touches the cylinder 13 fluid-tightly.

The support member 11 is fixed on the vehicle body so that the caliper body 7 is floating-supported by guide pins 25 and 25 slidably fitted into a pair of caliper support holes formed along the axial direction of the rotor 3 so as to allow the caliper body 7 to move in the axial direction of the rotor 3.

The electrically operated hydraulic pressure generator 15 is configured to have a pump which generates hydraulic pressure by using, as a drive source, a solid-state component having an electrically controllable expanding/contracting operation. That is, as shown in Fig. 3, the electrically operated hydraulic pressure generator 15 has a pump portion 157 including a cylindrical housing 151, a piston 153 stored in the housing 151, and a super-magnetostrictor 155 which is an electrically controllable solid-state component and which abuts on the piston 153. The pump portion 157 pumps fluid out by the reciprocating motion of the piston 153 due to the expanding/contracting operation of the super-magnetostrictor 155.

A fluid chamber 159 is defined between the piston 153 and an end portion of the housing 151 in the pump portion 157. An outlet port 159a and an inlet port 159b for taking operating fluid out and in respectively on the basis of the pump operation of the pump portion 157 are formed in the pump portion 157 so as to communicate with the fluid chamber 159. Further, a reservoir 161 for reserving operating fluid to be supplied into the fluid chamber 159, a first fluid passage 163 for making the reservoir 161 communicate with the inlet port 159b and a second fluid passage 165 for making both the first fluid passage 163 and the outlet port 159a communicate with a fluid chamber 27 (see Fig. 2) of the cylinder 13 are formed in the pump portion 157.

A fluid passage 29 (see Fig. 1), through which the foregoing second fluid passage 165 of the electrically operated hydraulic pressure generator 15 stored in the hydraulic source storage portion 21 of the bridge portion 17 communicates with the fluid chamber 27 of the cylinder 13, as shown in Fig. 2, is formed in the caliper body 7.

The outlet and inlet ports 159a and 159b are provided with check valves 167 and 169 respectively. The second fluid passage 165 is provided with a normally-closed electromagnetic valve 171 which makes an operation controlled on the basis of a control signal issued from a controller 31 which will be described later.

The check valve 167 of the outlet port 159a opens a corresponding flow path when the piston 153 is in a discharge stroke, and closes the flow path when the piston 153 is in a suction stroke. On the other hand, the check valve 169 of the inlet port 159b opens a corresponding flow path when the piston 153 is in a suction stroke, and closes the flow path when the piston 153 is in a discharge stroke.

The electromagnetic valve 171 keeps a corresponding flow path closed during the pumping operation (that is, braking operation) to prevent the outlet port 159a from communicating with the reservoir 161 and the inlet port 159b. The electromagnetic valve 171 opens the flow path at the absence of the pumping operation (that is, at the non-braking operation) so that operating fluid delivered from the cylinder 13 is returned to the reservoir 161 via the second fluid passage 165.

A piston seal 173 is provided on an inner circumference of the housing 151 where the piston 153 slides so that the piston 153 comes into contact with the housing 151 fluid-tightly.

A return spring 175 disposed in the fluid chamber 159 urges the piston 153 to depart from the end portion of the fluid chamber (that is, to abut on the super-magnetostrictor 155 which is a solid-state component).

The electrically operated hydraulic pressure generator 15 has the aforementioned super-magnetostrictor 155 having characteristics of expanding with the increase in applied magnetic field, a coil 177 for applying magnetic field to the super-magnetostrictor 155 when a current is supplied to the coil 177, the housing 151 for storing and holding the super-magnetostrictor 151 and the coil 177 in its cylindrical inside to transmit the expanding/contracting operation of the super-magnetostrictor 155 to the piston 153, and the electromagnetic valve 171 for opening the second fluid passage 165 at the absence of the braking operation to release braking pressure into the reservoir 161.

Both controlling the current supplied to the super-magnetostrictor 155 and controlling the operation of the electromagnetic valve 171 are performed by the controller 31 which is provided on the vehicle body separately from the electrically operated hydraulic pressure generator 15.

The housing 151 slidably stores and holds the piston 153 in its cylindrical inside continuously to a storage region for the super-magnetostrictor 155 and the coil 177 so that the expanding/contracting operation of the super-magnetostrictor 155 is transmitted to the piston 153. The housing 151 further functions as a yoke for forming a closed magnetic circuit surrounding the super-magnetostrictor 155, the coil 177, etc.

The return spring 175 of the piston 153 serves also as a pre-load spring for making the expanding/contracting operation of the super-magnetostrictor 155 efficient.

In order to reciprocate the piston 153 appropriately during the braking operation, or the like, the controller 31 has a pumping operation control circuit, not shown, for making the super-magnetostrictor 155 expand/contract in a predetermined period in accordance with application of a current to the coil 177, and an electromagnetic valve control circuit, not shown, for controlling the operation of the electromagnetic valve 171.

The quantity of expansion/contraction of the super-magnetostrictor 155 is proportional to the intensity of the magnetic field given from the coil 177. Hence, the discharge stroke due to the piston 153 is performed by increasing the intensity of the magnetic field generated in the coil 177 from an initial value to a predetermined value to thereby drive the super-magnetostrictor 155 to make a predetermined expanding operation. On the other hand, the suction stroke due to the piston 153 is performed by decreasing the intensity of the magnetic field generated in the coil 177 from the predetermined value to the initial value to thereby drive the super-magnetostrictor 155 to make a predetermined contracting operation.

In the discharge stroke due to the piston 153, the pumping operation control circuit of the controller 31 controls the current to be applied to the coil 177 so that the intensity of the magnetic field generated in the coil 177 is increased from the initial value to the predetermined value. On the other hand, in the suction stroke, the pumping operation control circuit of the controller 31 controls the current supplied to the coil 177 so that the intensity of the magnetic field generated in the coil 177 is decreased from the predetermined value to the initial value.

The pumping operation control circuit achieves repetition of discharge and suction strokes by using a predetermined-cycle alternating current as the current supplied to the coil 177.

The aforementioned electrically operated hydraulic pressure generator 15 is stored in the hydraulic source storage portion 21 formed in the bridge portion 17 of the caliper body 7 so that the electrically operated hydraulic pressure generator 15 is approximately closely fitted into the hydraulic source storage portion 21. The operation of the electrically operated hydraulic pressure generator 15 is controlled by the controller 31 which is disposed, for example, in the periphery of a braking operation portion such as a brake pedal, or the like.

Next, a method of operating the disc brake 1 configured as described above will be described below.

When, for example, a brake pedal not shown is pushed for a braking operation, the controller 31 controls the electrically operated hydraulic pressure generator 15 on the basis of an electric signal corresponding to the brake pedal pushing force to drive the super-magnetostrictor 155 to make an expanding/contracting operation. By this expanding/contracting operation, the pump portion 157 sucks operating fluid from the reservoir 161 into the fluid chamber 159 via the first fluid passage 163, the check valve 169 and the inlet port 159b and discharges the operating fluid from the fluid chamber 159 via the outlet port 159a and the check valve 167. Hydraulic pressure generated by the discharge is supplied into the fluid chamber 27 via the second fluid passage 165 and the fluid passage 29 of the caliper body 7. By the hydraulic pressure, the piston 9 slides in the cylinder 13 in the axial direction of the rotor to press one friction pad 5 against the rotor 3. When one friction pad 5 is pressed against the rotor 3, the floatingly supported caliper body 7 moves left in Fig. 2 by the reaction thereof. As a result, the reaction portion 19 presses the other friction pad 6 against the rotor 3 to thereby generate a braking force. Incidentally, during the aforementioned braking operation, the controller 31 controls the electromagnetic valve 171 to be closed to thereby prevent the outlet port 159a from communicating with the reservoir 161 and the inlet port 159b.

When the braking operation is released, the controller 31 stops the pump portion 157 from being driven and opens the electromagnetic valve 171 so that the operating fluid delivered into the cylinder 13 is returned to the reservoir 161 via the fluid passage 29 of the caliper body 7 and the second fluid passage 165. As a result, the piston 9 in the cylinder 13 is pressed back away from the rotor 3, so that the braking force is released. Incidentally, at the point of time when the operating fluid has been sufficiently sucked into the reservoir 161, the electromagnetic valve 171 is closed to get in a normal state (non-braking state).

In the aforementioned disc brake 1, hydraulic piping between the cylinder 13 on the caliper body 7 and the electrically operated hydraulic pressure generator 15 can be made unnecessary because the electrically operated hydraulic pressure generator 15 is incorporated in the caliper body 7, itself, of the braking unit and the fluid passage 29 for leading hydraulic pressure generated by the electrically operated hydraulic pressure generator 15 is formed in the caliper body 7 itself. Moreover, the transmission time of the hydraulic pressure can be shortened as well as pressure loss can be minimized because the distance between the cylinder 13 on the caliper body 7 and the electrically operated hydraulic pressure generator 15 can be reduced extremely.

Accordingly, transmission of hydraulic pressure from the electrically operated hydraulic pressure generator 15 to the cylinder 13 can be made efficiently so that it is easy to improve the operating accuracy in terms of response.

In addition, both increase in the degree of freedom of parts layout and reduction in production cost can be achieved correspondingly to the fact that the countermeasure for protection of hydraulic piping becomes unnecessary by the omission of the piping.

On the other hand, an electric wiring passage disposed for connecting the controller and the electrically operated hydraulic pressure generator 15 to each other in order to operate the electrically operated hydraulic pressure generator in accordance with the braking operation becomes long compared with the background-art disc brake provided with the electrically operated hydraulic pressure generator disposed near to a braking operation portion. In comparison of an electric wiring line with hydraulic piping, however, a fault, or the like, in the electric wiring line can be detected easily by a continuity check test, or the like, and also protection on the electric wiring line against a flying stone, or the like, can be achieved easily.

Moreover, inspection of the electrically operated hydraulic pressure generator 15 can be made simultaneously with inspection of the cylinder 13. Hence, an improvement in maintenance property can be achieved by reduction in the number of points to be inspected for insurance of safety of braking.

Further, in this embodiment of the present invention, the caliper body 7 is configured so that the electrically operated hydraulic pressure generator 15 is stored in the bridge portion 17 which strides across an outer circumference of the rotor 3. The bridge portion 17 is formed as a pipe structure using the hollow portion (hydraulic source storage portion 21) for storing the electrically operated hydraulic pressure generator 15. Hence, enhancement in stiffness of the bridge portion 17 and the caliper body 7 as a whole is achieved while increase in weight is suppressed compared with the case of a solid structure. Thus, the improvement of braking performance due to the improvement of stiffness can be achieved.

Incidentally, the attachment portion of the electrically operated hydraulic pressure generator 15 is not limited to the bridge portion 17 of the caliper body 7. In short, the electrically operated hydraulic pressure generator 15 may be disposed in any place so long as the hydraulic piping from the electrically operated hydraulic pressure generator 15 to the cylinder 13 can be abolished. For example, the electrically operated hydraulic pressure generator 15 may be disposed in the reaction portion 19 mounted on the other end of the bridge portion 17 on the caliper body 7. For example, the electrically operated hydraulic pressure generator 15 may be disposed so as to be adjacent to the cylinder 13 on the one end of the bridge portion 17 if possible in terms of space.

Although the aforementioned embodiment has shown the case where the super-magnetostrictor 155 is used as the solid-state component which makes an electrically controllable expanding/contracting operation, the present invention may be applied also to the case where any other element such as piezoelectric ceramics, or the like, is used as the solid-state component which makes an electrically controllable expanding/contracting operation.

The present invention may be applied not only to a disc brake of the type in which a caliper body is floatingly supported by a support member so as to be movable in the axial direction of a rotor, but also to any other disc brake such as a so-called opposed piston type disc brake in which a caliper body is fixedly supported by a support member and has a pair of piston-storing cylinders on opposite sides of a bridge portion which strides across an outer circumference of a rotor.

Further, the attachment position of the controller 31 for controlling the operation of the electrically operated hydraulic pressure generator 15 is not limited to the periphery of the braking operation portion. The controller 31 may be positioned suitably in consideration of wiring laying characteristic, or the like, of electric wiring between the electrically operated hydraulic pressure generator 15 and the controller 31, relevance to other on-vehicle controllers, etc.

### INDUSTRIAL APPLICABILITY

In the disc brake according to the present invention, the electrically operated hydraulic pressure generator is incorporated in the caliper body, itself, of the braking unit. In addition, the hydraulic passage for leading hydraulic pressure generated in the electrically operated hydraulic pressure generator into the cylinder on the caliper body is formed in the caliper body itself. Hence, hydraulic piping for connecting the caliper body and the electrically operated hydraulic pressure generator to each other can be made unnecessary. Moreover, the distance between the caliper body and the electrically operated hydraulic pressure generator can be reduced extremely. Hence, the transmission time of hydraulic pressure can be shortened.

Accordingly, transmission of hydraulic pressure from the electrically operated hydraulic pressure generator to the cylinder can be made efficiently, so that the improvement in operating accuracy can be achieved in terms of response. Moreover, both increase in the degree of freedom of parts layout and reduction in production cost can be achieved correspondingly to the fact that a countermeasure for protection of piping becomes unnecessary.

On the other hand, the electric wiring line between the controller for operating the electrically operated hydraulic pressure generator in accordance with the braking operation and the electrically operated hydraulic pressure generator becomes long compared with the background-art disc brake provided with the electrically operated hydraulic pressure generator disposed near to the braking operation portion. In comparison of the electric wiring line with hydraulic piping, however, a fault in the electric wiring line can be detected easily by a continuity check test, or the like, and protection on the electric wiring line against a flying stone, or the like, can be achieved easily.

Moreover, inspection of the electrically operated hydraulic pressure generator can be made simultaneously with inspection of the cylinder. Hence, an improvement in maintenance property can be achieved by reduction in the number of points to be inspected for insurance of safety of braking.

Further, the bridge portion of the caliper body is formed as a pipe structure using the hollow portion for storing the electrically operated hydraulic pressure generator . Hence, enhancement in stiffness of the bridge portion and the caliper body as a whole can be achieved while increase in weight is suppressed compared with the case of a solid structure. Thus, an improvement of braking performance due to an improvement of stiffness can be achieved.

## Claims

1. A disc brake (1) comprising a piston (9) slidably disposed in a cylinder (13) of a caliper body (7) so that hydraulic pressure supplied into the cylinder (13) makes the piston (9) press a friction pad (5) against a rotor (3),
wherein the disc brake (1) further comprises an electrically operated hydraulic pressure generator (15) for supplying hydraulic pressure into the cylinder(13),
wherein the electrically operated hydraulic pressure generator (15) is configured to generate hydraulic pressure in accordance with a braking operation by use of a solid-state component having an electrically controllable expanding/contracting operation as a drive source, and the electrically operated hydraulic pressure generator (15) is accommodated in the caliper body, (7) and
wherein said caliper body (7) further includes a bridge portion (17) which strides across an outer circumference of said rotor, (3)
**characterized in that**
the electrically operated hydraulic pressure generator (15) is accommodated in said bridge portion (17).

## Patentansprüche

1. Scheibenbremse (1) mit einem Kolben (9), der in einem Zylinder (13) eines Rachenkörpers (7) gleitbar angeordnet ist, so dass der in den Zylinder (13) zugeführte hydraulische Druck den Kolben (9) veranlasst, einen Reibungskörper (5) gegen einen Rotor (3) zu pressen,
wobei die Scheibenbremse (1) außerdem eine elektrisch betätigten Hydraulikdruck- Generator (15) zum Zuführen von hydraulischem Druck in den Zylinder (13) aufweist,
wobei der elektrisch betätigte Hydraulikdruck- Generator (15) konfiguriert ist, um einen hydraulischen Druck in Übereinstimmung mit der Bremsbetätigung durch den Gebrauch eines Festkörperbauteils zu erzeugen, das eine elektrisch steuerbare Ausdehnungs- / Kontraktions- Arbeitsweise als eine Antriebsquelle hat, und der elektrisch betätigte Hydraulikdruck- Generator (15) in dem Rachenkörper (7) untergebracht ist, und
wobei der Rachenkörper (7) außerdem einen Brückenabschnitt (17) enthält, der einen Außenumfang des Rotors (3) überbrückt
**dadurch gekennzeichnet, dass**
der elektrisch betätigte Hydraulikdruck- Generator (15) in dem Brückenabschnitt (17) untergebracht ist.

## Revendications

1. Disque de frein (1) comprenant un piston (9) agencé d'une manière coulissante dans un cylindre (13) du corps d'un étrier de frein (7) de telle sorte que la pression hydraulique fournie dans le cylindre (13) amène le piston (9) à presser une plaquette de frein (5) contre un rotor (3) ;
dans lequel le disque de frein (1) comprend en outre un dispositif de génération de pression hydraulique à commande électrique (15) pour fournir la pression hydraulique dans le cylindre(13) ;
dans lequel le dispositif de génération de pression hydraulique à commande électrique (15) est configuré pour produire de la pression hydraulique proportionnellement à une utilisation du frein par le biais d'un composant à semi-conducteur doté d'un fonctionnement par dilatation / contraction contrôlé par des moyens électriques qui sert de source d'entraînement, et le dispositif de génération de pression hydraulique à commande électrique (15) est logé dans le corps de l'étrier de frein (7) ; et
dans lequel ledit corps d'étrier de frein (7) comprend en outre une partie en forme de pont (17) qui enjambe une circonférence extérieure dudit rotor ; (3)
**caractérisé en ce que** :
le dispositif de génération de pression hydraulique à commande électrique (15) est logé dans ladite partie en forme de pont (17).
